# EUROPÄISCHE PATENTSCHRIFT

(11) **EP 1 051 898 B1**
(45) Veröffentlichungstag und Bekanntmachung des Hinweises auf die Patenterteilung: **18.02.2004**
(21) Anmeldenummer: 00109400.2
(22) Anmeldetag: 03.05.2000
(51) Int. Cl.: A01D 41/12

(54) **Einrichtung zum Regeln der Vortriebsgeschwindigkeit einer Erntemaschine mit unscharfer Logik**
Device for regulate the rate of advance of a harvester by fuzzy logic
Dispositif pour régler la vitesse d'avance d'une récolteuse utilisant la logique floue

(30) Priorität: 08.05.1999 DE 19921466
(43) Veröffentlichungstag der Anmeldung: 15.11.2000
(73) Patentinhaber: DEERE & COMPANY, Moline, Illinois 61265-8098 (US)
(72) Erfinder: Weber, Konrad Andreas, 66780 Siersburg (DE)
(74) Vertreter: Holst, Sönke, Dr.

(56) Entgegenhaltungen:
- EP-A- 0 014 234
- FR-A- 2 376 616
- GB-A- 911 361
- US-A- 3 470 681
- US-A- 4 458 471
- US-A- 4 487 002
- US-A- 5 795 221

## Beschreibung

Die Erfindung betrifft eine Einrichtung zum Regeln der Vortriebsgeschwindigkeit einer Erntemaschine, mit einer Steuerschaltung, die durch einen Sensor mit einem Signal beaufschlagt wird, das eine Information über den Fluß, insbesondere die Rate und/oder Menge von einer Erntegutaufnahmeeinrichtung aufgenommenen Ernteguts enthält, und die die Geschwindigkeit einer Vortriebseinrichtung der Erntemaschine derart einstellt, daß die Rate des von einer Erntegutverarbeitungseinrichtung verarbeiteten Ernteguts einem bestimmten, voreingestellten oder einstellbaren Sollwert entspricht.

Aus dem Stande der Technik sind verschiedene Regeleinrichtungen bekannt, mit denen die Vortriebsgeschwindigkeit bzw. die Aufnahmegeschwindigkeit einer Aufnahmeeinrichtung einer Erntemaschine gesteuert werden können.

In der EP 377163 A ist eine Regeleinrichtung einer Erntemaschine offenbart, bei der die Aufnahmeeinrichtung mit einer Geschwindigkeit angetrieben wird, die zur Vortriebsgeschwindigkeit proportional ist, wobei der Proportionalitätsfaktor von der Art der jeweiligen Aufnahmeeinrichtung abhängt. In der DE 19509496 A wird vorgeschlagen, die Drehgeschwindigkeit der Haspel eines Mähdreschers in Abhängigkeit von der Vortriebsgeschwindigkeit nach einer nicht proportionalen, in einem Speicher abgelegten Kennlinie zu steuern, die bei niedriger Vortriebsgeschwindigkeit eine höhere Voreilung der Haspel und bei hoher Vortriebsgeschwindigkeit eine geringere oder keine Voreilung bewirkt. Nach der EP 812530 A kann die Haspeldrehzahl auch von der Schnitthöhe abhängen.

In der DE 2919531 A ist eine Erntemaschine beschrieben, bei der die Vortriebsgeschwindigkeit derart geregelt wird, daß sich eine konstante Dichte des von der Erntemaschine abgegebenen Verlustkornmaterials ergibt. In ähnlicher Weise schlägt die DE 2753813 A vor, Belastungsänderungen an Schneid-, Förder, Dresch- oder Trennvorrichtungen eines Mähdreschers zu messen und zur Regelung der Vortriebsgeschwindigkeit zu verwenden; die genannte Belastung soll konstant bleiben. Die DE 2436072 A offenbart eine Erntemaschine, bei der im vorderen Bereich des Schneidwerks eine oder mehrere Tastvorrichtungen vorgesehen sind, die die Menge des zu verarbeitenden Ernteguts erfassen, und die Vortriebsgeschwindigkeit der Erntemaschine steuern. Nach der DE 4320977 A wird zur Regelung der Fahrgeschwindigkeit eines Mähdreschers die gemessene Kornabscheidung am Dreschkorb und die gemessene Kornabscheidung an einem Sieb der Trenneinrichtung verwendet, die zeitabhängig berücksichtigt werden.

In der DE 1582177 A ist ein Mähdrescher offenbart, bei dem die Fördergeschwindigkeit der Aufnahmeeinrichtung in Abhängigkeit von der Fahrgeschwindigkeit derart geregelt wird, daß ein konstanter Durchsatz des Erntegutes erzielt wird. In der GB 2155666 A wird die Fahrgeschwindigkeit variiert, so daß die Drehgeschwindigkeit bzw. das Drehmoment einer Häckseltrommel konstant bleibt.

In der US 4487002 A ist ein Mähdrescher beschrieben, der mit einem Sensor für den Durchsatz geernteten Guts versehen ist, der die Leistung des Schrägförderers mißt. Außerdem wird die Drehgeschwindigkeit des Motors und die Fahrgeschwindigkeit gemessen. Diese Meßwerte werden einer Steuerschaltung zugeführt, die die Fahrgeschwindigkeit steuert und versucht, den Motor auf einer konstanten, einstellbaren Geschwindigkeit zu halten. Wenn die Last des Förderers durch geerntetes Gut über einen Schwellenwert ansteigt, wird die aktuelle Fahrgeschwindigkeit primär in Abhängigkeit von der Drehzahl des Motors gesteuert, so daß die gewünschte Drehzahl erhalten bleibt. Falls die Last diesen Schwellenwert nicht übersteigt, also keine Ernte erfolgt, sondern auf einer Straße gefahren wird, hängt die aktuelle Fahrgeschwindigkeit primär von der gewählten Fahrgeschwindigkeit ab. Der Mähdrescher wird schnell abgebremst, wenn ein zweiter Schwellenwert des Durchsatzes überschritten wird, d.h. eine Verstopfung droht.

Es ist also wünschenswert, die Vortriebsgeschwindigkeit der Erntemaschine so zu steuern, daß die Leistung des Motors, bzw. die Rate, mit der das Erntegut verarbeitet wird, etwa konstant ist. Eine derartige Betriebsweise ist besonders wirtschaftlich. Jedoch variiert die Dichte bzw. Höhe des Ernteguts mitunter derart stark, daß die bekannten Regelungen sprunghafte oder häufige Anpassungen der Geschwindigkeit zur Folge haben. Bei plötzlichen Drehmomentanstiegen infolge lokal ansteigender Dichte des Ernteguts sinkt die Motordrehzahl ab, und es erfolgt ein Nachregulieren der Vortriebsgeschwindigkeit. Damit wird erreicht, daß kurzzeitig weniger Erntegut in die Maschine gefördert wird und somit das Drehmoment der Erntegutverarbeitungseinrichtung wieder abklingen kann. Aus seiner Drehmomentreserve kann der Motor bei kurzzeitig erhöhtem Kraftstoffbedarf wieder die ursprüngliche Arbeitsdrehzahl erreichen. Der erhöhte Kraftstoffbedarf sowie die mit den Lastschwankungen einhergehenden mechanischen Belastungen von antriebs- und momentenübertragenden Komponenten sind dabei als nachteilig anzusehen. Außerdem sind die andauernden Beschleunigungs- und Verzögerungsvorgänge für eine auf der Maschine sitzende Bedienungsperson unangenehm.

Diese Probleme werden erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Steuerschaltung enthält einen sogenannten Fuzzy-Regler, d. h. eine unscharfe Logik, die deterministisch, zeitinvariant und nichtlinear ist. Der Einsatz eines nichtlinearen Regelkonzeptes ist dadurch motiviert, daß der Zusammenhang zwischen der Rate des aufgenommenen Ernteguts und der Fahrgeschwindigkeit nichtlinear ist, da die Mengenverteilung im aufgenommen Erntegut, insbesondere Schwad, nicht vorbekannt, sondern zufällig ist. Eine Erhöhung/Verminderung der Fahrgeschwindigkeit um einen bestimmten Betrag hat nicht immer dieselbe Änderung der Rate zur Folge. Der Förderprozeß hängt entscheidend von den Eigenschaften und der pro Flächeneinheit abzuerntenden Menge des zu fördernden Materials ab. Diesbezüglich ist z.B. bei geschnittenem Gras, aber auch generell bei allen Erntegutarten mit erheblichen Variationen zu rechnen, da verschiedene Klima- und Wachstumsbedingungen diese Eigenschaften beeinflussen. Die materialspezifischen Eigenschaften, die für den Förderprozeß relevant sind, sind deshalb nur mit erheblichem Aufwand zu identifizieren und zu quantifizieren, wenn dies überhaupt möglich ist. Es sind also die stark variierenden Eigenschaften des Erntegutes, die von einer Vielzahl von Einflußgrößen abhängen, die dem zu regelnden (Förder-) Prozeß einen nichtlinearen Charakter verleihen. Deshalb wird einem nichtlinearen Regelkonzept der Vorzug vor einem linearen Konzept gegeben. Zur Regelung nichlinearer Prozesse sind Fuzzy-Regler besonders geeignet, da sie selbst nichtlineare Systeme sind. Sie bilden den Eingangsgrößenraum nichtlinear auf den Ausgangsgrößenraum ab.

Erfindungsgemäß erhält die Steuerschaltung durch einen Sensor ein Signal, das eine Information über den Fluß, d. h die Rate und/oder Menge des von einer Erntegutaufnahmeeinrichtung aufgenommenen Ernteguts enthält. Als Rate wird hier die pro Zeiteinheit aufgenommene Menge verstanden; die Menge ist die über die Zeit integrierte Rate. Als Menge wird das Volumen bzw. die Masse des Ernteguts verstanden. Das genannte Signal gibt also den derzeitigen Wert der Rate und/oder Menge aufgenommenen Ernteguts wieder. Die Vortriebsgeschwindigkeit wird durch die Steuerschaltung mit dem Fuzzy-Regler derart eingestellt, daß die Rate des von einer Erntegutverarbeitungseinrichtung der Erntemaschine, beispielsweise einer Häckseltrommel eines Feldhäckslers, oder einer Schneid-, Förder-, Dresch-, oder Trenneinrichtung eines Mähdreschers, verarbeiteten Ernteguts einem Sollwert entspricht. Dieser Sollwert kann fest eingegeben oder durch eine Bedienungsperson einstellbar sein. Da die Rate des von der Erntegutverarbeitungseinrichtung verarbeiteten Guts konstant ist, ist auch die Belastung letzterer konstant. Auch der Hauptantriebsmotor wird im Ergebnis mit konstanter Leistung betrieben, was sehr wirtschaftlich ist. Eine einstellbare Rate kann in Form eines Prozentsatzes einer maximalen Rate eingegeben werden. Die Regeleinrichtung regelt die Erntemaschine nicht nur auf konstante Motordrehzahl, was gute Wirtschaftlichkeit bedeutet, sondern sorgt gleichzeitig dafür, daß der Durchsatz zu jedem Zeitpunkt ein Optimum erreicht und die Maschine sogar bei wechselnden Erntebedingungen immer nahe der Leistungsgrenze arbeiten kann. Außerdem kann über Energiebetrachtungen herausgefunden werden, wo der optimale Betriebspunkt der Erntemaschine liegt. Eine Vorwahl dieses Betriebspunktes ist eine ökonomische Betriebsart, in der Durchsatz und Energiebedarf in optimalem Verhältnis zueinander stehen. Die unscharfe Logik erzeugt in an sich bekannter Weise Zugehörigkeitsfunktionen für die Eingangsvariable oder Eingangsvariablen der Steuerschaltung und ermittelt nach einem Regelwerk Ausgangswerte, mit denen die Vortriebsgeschwindigkeit eingestellt wird.

Weiterhin erweist es sich als vorteilhaft, wenn die Steuerschaltung zusätzlich mittels des Fuzzy-Reglers die Fördergeschwindigkeit variiert, mit der Erntegut der Erntegutverarbeitungsvorrichtung zugeführt wird. Schwach nichtlinear ist nämlich auch der Zusammenhang zwischen der Fördergeschwindigkeit, die beispielsweise durch die Drehzahl eines Schneckenförderers festgelegt sein kann, und dem der geförderten Menge, weil aufgrund der Eigenschaften des Erntematerials eine vollständige Beaufschlagung des Förderers mit Erntegut nicht immer gewährleistet ist. Aus den genannten Gründen ist die Verwendung eines Fuzzy-Reglers für die Regelung dieser Fördergeschwindigkeit besonders vorteilhaft.

Außerdem kann der Steuerschaltung mit dem Fuzzy-Regler ein mittels eines Sensors erzeugtes Signal zugeführt werden, das der Dicke des der Erntegutverarbeitungseinrichtung zugeführten Erntegutstroms entspricht, bzw. einer Abweichung dieser Dicke von einem Sollwert. Da auch die Breite des Erntegutstroms und seine Geschwindigkeit in der Regel bekannt oder leicht meßbar ist, kann anhand der Dicke die Rate des der Erntegutverarbeitungseinrichtung zugeführten Ernteguts unschwer berechnet werden. Dieses Signal dient zur Regelung der Vortriebsgeschwindigkeit und vorzugsweise auch der Fördergeschwindigkeit. Insbesondere kann dem Fuzzy-Regler eine Abweichung (d. h. Differenz) zwischen dem gemessenen Signal und dem Signal, das einem Sollwert entspricht, zugeführt werden. Auch die Zeitableitung des Signals kann dem Fuzzy-Regler als Eingangswert zugeführt werden. Anzumerken ist, daß in der Regel die Zeitableitung des Signals mit der Zeitableitung der genannten Abweichung übereinstimmen wird, da der Sollwert im Normalfall zeitlich konstant ist.

Die Messung der Dicke des der Erntegutverarbeitungseinrichtung zugeführten Erntegutstroms kann in an sich bekannter Weise durch einen Sensor erfolgen, der den Abstand zwischen zwei Walzen, insbesondere Vorpreßwalzen, mißt, zwischen denen das Erntegut hindurch transportiert wird. Die Verwendung einer Fuzzy-Regelung hat bei derartigen Walzen den Vorteil, daß sie berücksichtigen kann, daß der Abstand der Vorpreßwalzen bei konstanter Erntegutförderrate auch von deren Drehzahl abhängt, . d.h., daß Änderungen in der Geschwindigkeit der Vorpreßwalzen bei konstanter Rate eine Änderung im Walzenabstand zur Folge haben.

Alternativ oder zusätzlich zur Lehre des Anspruchs 1 kann ein Puffer vorgesehen sein, in dem von der Erntegutaufnahmeeinrichtung aufgenommenes Gut zwischengespeichert wird, bevor es der Erntegutverarbeitungseinrichtung zugeführt wird, was mittels eines (Schnecken-) Förderers geschehen kann. Der Förderer hat vorzugsweise einen als Schleuderförderer ausgebildeten Austragsbereich. Der Vorteil des Puffers liegt darin, daß er kurz- und mittelfristige Schwankungen in der Rate des aufgenommenen Ernteguts ausgleichen kann.' Wird also zwischenzeitlich nur wenig Erntegut aufgenommen, da es beispielsweise nur in größerem Abstand gesät wurde, teilweise eingegangen ist, oder dergleichen, kann die Erntemaschine mit etwa gleichbleibender Vortriebsgeschwindigkeit und konstanter Erntegutverarbeitungsgeschwindigkeit weiter betrieben werden, ohne daß eine Beschleunigung zur gleichmäßigen Beaufschlagung der Erntegutverarbeitungseinrichtung nötig wäre. Analog kann kurzfristig höheren Aufkommmensraten des Erntegutes begegnet werden, ohne daß eine Verstopfung der Erntemaschine zu befürchten wäre. Ein derartiger Puffer ist auch an bereits bekannten Erntemaschinen ohne Fuzzy-Regler verwendbar.

'Der Puffer kann fest oder lösbar mit der Erntemaschine verbunden werden. Der Vorteil eines lösbaren Puffers, der mit einem Erntevorsatz fest oder lösbar verbunden sein kann, liegt darin, daß er auch an bereits vorhandenen Erntemaschinen verwendbar ist.

Auch der Füllstand des Puffers kann mittels eines Sensors erfaßt werden, dessen Ausgangssignal einer Steuerschaltung. zugeführt wird, die die Vortriebsgeschwindigkeit der Erntemaschine und/oder die Geschwindigkeit des Förderers steuert. Die Steuerung erfolgt derart, daß ein Schwellenwert des Füllstandes des Ernteguts im Puffer möglichst nicht unterschritten wird. Diese Steuerschaltung ist insbesondere die oben beschriebene Fuzzy-Regelung, kann aber auch eine nichtunscharfe Logik sein. Alternativ zu dem Signal des Sensors kann auch eine Abweichung zwischen dem Signal und einem Signal, das einem vorbestimmten Füllstand entspricht, dem (Fuzzy-)Regler zugeführt werden. Auch die Zeitableitung des Signals (bzw. der genannten Abweichung, die aber identisch sind, da der vorbestimmte Füllstand konstant ist) können dem (Fuzzy-)Regler zugeführt werden.

Zur Verstellung der Vortriebsgeschwindigkeit und/oder der Fördergeschwindigkeit kann je ein hydrostatischer Antrieb mit veränderbarer Drehzahl vorgesehen sein. Dazu kann eine elektronisch verstellbare Hydrostatpumpe dienen, oder ein Servomotor, der eine Taumelscheibe der Hydrostatpumpe verstellt.

In den Zeichnungen sind zwei nachfolgend näher beschriebene Ausführungsbeispiele der Erfindung dargestellt. Es zeigt:
- Fig. 1: eine Erntemaschine in Seitenansicht und in schematischer Darstellung,
Fig. 2 einen schematischen Schnitt durch die Erntemaschine und einen Erntevorsatz,
Fig. 3 einen vertikalen Schnitt durch den Schneckenförderer der Fig. 2,
Fig. 4 eine Draufsicht auf den Schneckenförderer der Fig. 3,
Fig. 5 ein Blockschaltbild eines Regelsystems der Erntemaschine,
Fig. 6 einen Programmablaufplan des Regelsystems,
Fig. 7 eine Zugehörigkeitsfunktion für den Walzenabstand,
Fig. 8 eine Zugehörigkeitsfunktion für das Befüllniveau des Puffers,
Fig. 9 Verstellwinkel für den Fahrantrieb,
Fig. 10 Verstellwinkel für den Antrieb des Schneckenförderers, und
Fig. 11 eine schematische Seitenansicht einer Erntemaschine nach einer zweiten Ausführungsform der Erfindung.

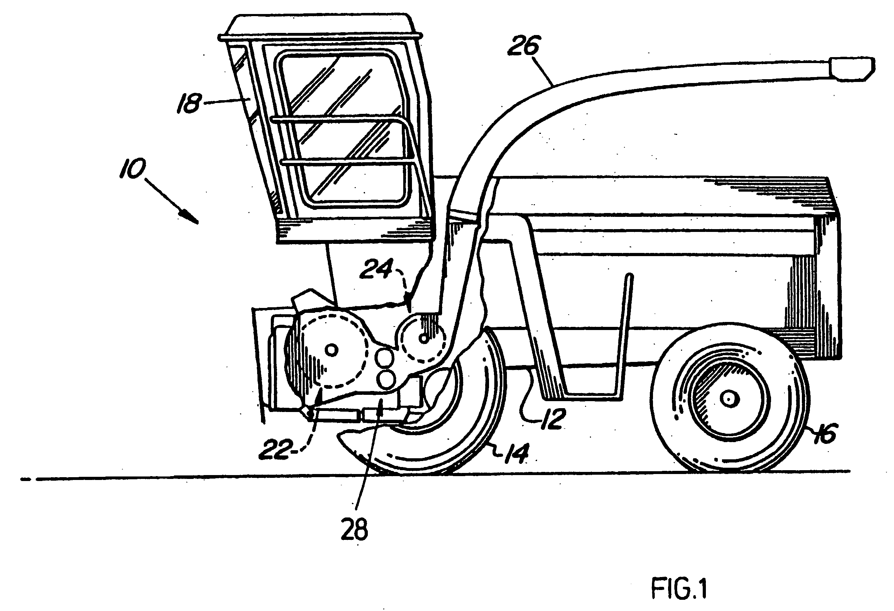

Eine in Figur 1 gezeigte erste Ausführungsform einer Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine in Figur 1 nicht eingezeichnete Erntegutaufnahmevorrichtung einsehbar ist. Mittels der Erntegutaufnahmevorrichtung vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

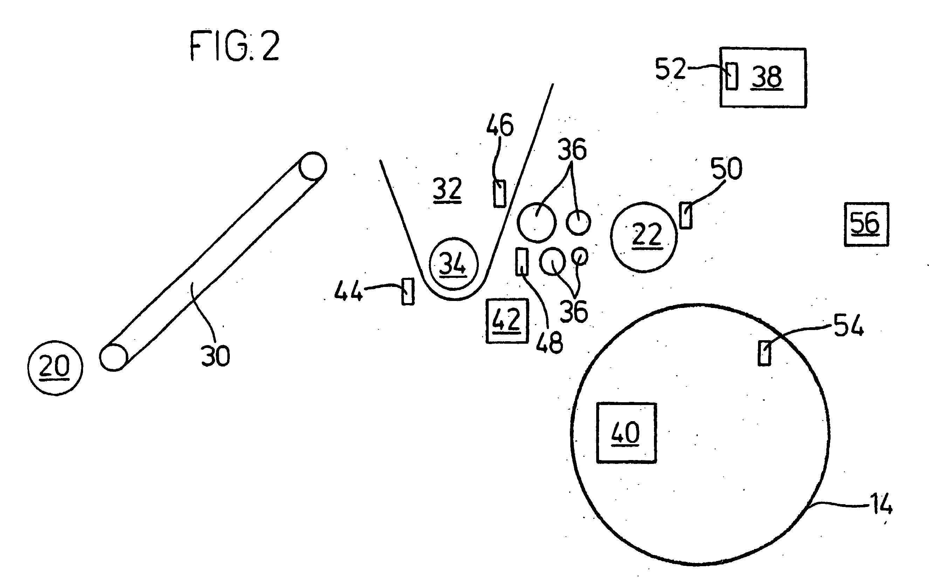

In Figur 2 ist ein schematischer vertikaler Schnitt durch die Erntemaschine 10 in seitlicher Ansicht wiedergegeben. Eine Erntegutaufnahmeeinrichtung 20, die beispielsweise eine an sich bekannte Pick-up, ein Mähhäcksler, Pflücker oder Mähvorsatz ist, nimmt Erntegut vom Boden auf, oder schneidet es ab, und führt es einem Förderband 30 zu, das angetrieben ist. Das Erntegut wird vom Förderband 30 in einen Puffer 32 eingebracht, der zur Zwischenspeicherung des Erntegutes vor der weiteren Verarbeitung dient. Bei einigen Arten von Erntevorsätzen, z.B. Mähhäckslern oder Pflückern, kann sich das Förderband 30 erübrigen und das Erntegut vom Erntevorsatz 20 direkt in den Puffer 32 gefördert werden. Am Boden des Puffers 32 ist ein Schneckenförderer 34 angeordnet, der sukzessive Erntegut aus dem Puffer 32 entnimmt und es zwei hintereinander angeordneten Paaren von Vorpreßwalzen 36 zuführt. Letztere fördern das Erntegut der Häckseltrommel 22 zu, die es zerhackt und durch die Nachzerkleinerungsvorrichtung 28 und die Fördervorrichtung 24 durch den Austragsschacht 26 dem nebenher fahrenden Anhänger zuführt. Ein Hauptmotor 38, der in der Regel ein Verbrennungsmotor (Dieselmotor) ist, treibt die einzelnen Einrichtungen, mit denen das Erntegut transportiert und verarbeitet wird, an. Zum Vortrieb der Erntemaschine 10 ist am vorderen Rad 14 ein hydrostatischer Fahrantrieb 40 angeordnet, der über eine nicht eingezeichnete, vom Hauptmotor 38 angetriebene Ölpumpe mit unter Druck stehendem Hydrauliköl beaufschlagt wird. Die von Fahrantrieb 40 erzielte Vortriebsgeschwindigkeit der Erntemaschine 10 ist variierbar, was in an sich bekannter Weise mittels einer Taumelscheibe im Fahrantrieb 40 oder durch Variation des Öldrucks, mit dem der Fahrantrieb 40 beaufschlagt wird, geschehen kann. Auch der Schneckenförderer 34 ist mit einem hydrostatischen Antrieb 42 versehen, dessen Geschwindigkeit variierbar ist. Der Puffer 32 mit dem Schneckenförderer 34 kann fest an der Erntemaschine 10 montiert sein, wobei der Erntevorsatz 20 (und ggf. das Förderband 39) dann vorzugsweise lösbar an der Erntemaschine 10 befestigt ist. Alternativ ist der Puffer 32 mit dem Schneckenförderer 34 (lösbar oder dauerhaft) mit dem Erntevorsatz 20 verbunden und lösbar an der Erntemaschine 10 angebracht. Die letztgenannte Lösung hat den Vorteil, daß sie auch mit bereits vorhandenen Erntemaschinen 10 realisierbar ist, die keinen Puffer 32 aufweisen.

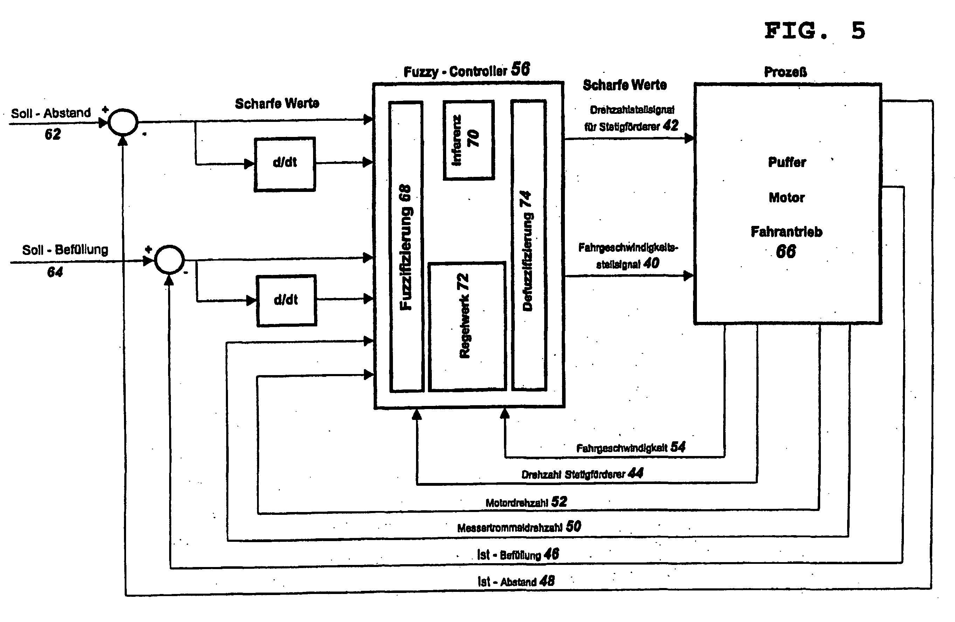

Zur Steuerung der Erntemaschine 10 ist eine Anzahl an Sensoren vorgesehen. Ein Drehzahlsensor 44 mißt die Drehzahl des Schneckenförderers 34. Ein Befüllniveausensor 46 erfaßt den Füllstand des Puffers 32 mit Erntegut. Ein Walzenabstandssensor 48 mißt den Abstand zwischen zwei zusammenwirkenden Vorpreßwalzen 36; dieser Abstand ist ein Maß für die Menge des der Häckseltrommel 22 zugeführten Erntegutes, die zusätzlich von der Drehgeschwindigkeit der Vorpreßwalzen 36 abhängt, die ebenfalls gemessen oder eingestellt werden kann. Ein derartiger Sensor ist aus der DE 19524752 A bekannt. Ein weiterer Drehzahlsensor 50 mißt die Drehzahl der Häckseltrommel 22, die direkt mechanisch durch den Hauptmotor 38 oder hydraulisch mittels eines hydrostatischen Antriebs angetrieben wird. Weiterhin wird durch einen Drehzahlsensor 52 die Drehzahl des Hauptmotors 38 gemessen und durch einen Vortriebsgeschwindigkeitssensor 54 die Vortriebsgeschwindigkeit des vorderen Rades 14, die der der Erntemaschine 10 entspricht. Alle genannten Sensoren sind (vorzugsweise über einen sogenannten CAN-Bus) mit einer Steuerschaltung 56 verbunden, die in Figur 5 dargestellt ist.

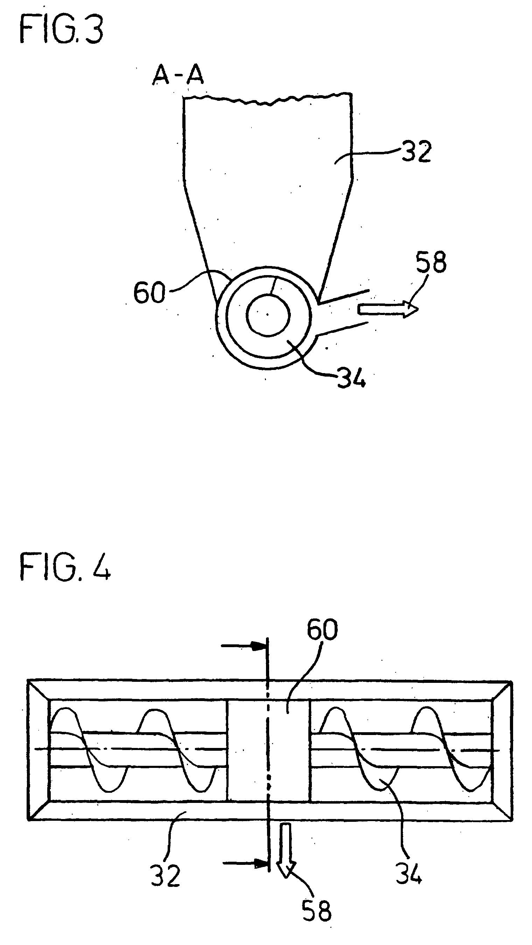

In den Figuren 3 und 4 ist der Schneckenförderer 34 detaillierter dargestellt. Er ist in Figur 4 in einer Draufsicht wiedergegeben, während Figur 3 einen Schnitt entlang der Linie A-A der Figur 4 zeigt. Der Schneckenförderer 34 fördert Erntegut in Richtung des Pfeils 58 aus dem Puffer 32 heraus und führt es den Vorpreßwalzen 36 zu. Anhand der Figur 4 ist erkennbar, daß das Erntegut durch den Schneckenförderer 34 bezüglich der Vortriebsrichtung der Erntemaschine 10 axial von links und rechts zum Austragsbereich im unteren Bereich des Puffers 32 gefördert wird. Der Austragsbereich ist durch eine Abdeckung 60 von Erntematerial im darüber liegenden Puffer 32 abgeschottet. Der Austragsbereich des Schneckenförderers 34 ist als sogenannter Schleuderförderer ausgebildet, der das Erntematerial in Richtung des Pfeils 58 radial zum Schneckenförderer 34 in den Vorpreßwalzenkanal der Erntemaschine 10 fördert. Da der Schneckenförderer 34 naturgemäß einen relativ konstanten Massenstrom fördert, können über die Verstellung der Drehzahl des Schneckenförderers 34 verschiedene Durchsatzraten eingestellt werden. Die Verbesserung gegenüber marktüblichen Erntevorsätzen zur Erntegut- (z.B. Gras-) Aufnahme und Förderung liegt in der steuerbaren und kontrollierten Ausnutzung der Eigenschaft des stetigen Förderns des Schneckenförderers 34 begründet.

Figur 5 zeigt ein Blockdiagramm des Regelsystems mit der Steuerschaltung 56, die in Form eines Mikroprozessors oder - controllers mit entsprechender Steuerungssoftware realisiert sein kann. Die Steuerschaltung 56 ist ein Fuzzy-Regler (unscharfe Logik), dem zwei Prozeßgrößen als Eingangsgrößen zugeführt werden. Diese Eingangsgrößen sind einerseits die Abweichung zwischen einem vorgegebenen Abstand zwischen den Vorpreßwalzen 36 und dem tatsächlichen, mittels des Walzenabstandssensors 48 gemessenen Abstand zwischen den Vorpreßwalzen 36, und andererseits die Differenz zwischen einem vorgegebenen Sollfüllstand im Puffer 32 und dem tatsächlichen Füllstand des Puffers 32, der mittels des Sensors 46 gemessen wird. Der Abstand zwischen den Vorpreßwalzen 36 ist, wie bereits angemerkt, ein Maß für den Mengendurchsatz durch die Erntemaschine 10, also des pro Zeiteinheit verarbeiteten Erntegutvolumens. Der gewünschte Durchsatz kann in Form des Sollabstands fest vorgegeben oder durch einen Benutzer eingegeben sein; dieser Sollabstand wird einem Eingang 62 der Steuerschaltung 56 zugeführt. Der Sollfüllstand im Puffer 32 kann ebenfalls durch den Bediener der Erntemaschine eingegeben oder fest auf einen zweckmäßigen Wert vorgegeben sein; er wird der Steuerschaltung 56 an einem Eingang 64 zugeführt. Die Steuerschaltung 56 hat zwei Ausgänge, nämlich ein Drehzahlstellsignal, das die Drehzahl des Schneckenförderers 34 (in der Zeichnung als Stetigförderer bezeichnet) einstellt, und ein Fahrgeschwindigkeitsstellsignal, mit dem die Geschwindigkeit des hydrostatischen Antriebs 40 des Rades 14 eingestellt wird. Die Steuerschaltung 56 regelt somit die Drehzahl des Schneckenförderers 34 und die Vortriebsgeschwindigkeit der Erntemaschine 10.

Mit dem rechts in Figur 5 eingezeichneten Rechteck ist ein Prozeß 66 angedeutet, der das Aufnehmen und Verarbeiten des Ernteguts unter Einsatz von Puffer 32, Hauptmotor 38 und Fahrantrieb 40 wiedergibt. Ausgangsgrößen dieses Prozesses sind die mit dem Vortriebsgeschwindigkeitssensor 54 gemessene Fahrgeschwindigkeit, die mit dem Drehzahlsensor 44 gemessene Drehzahl des Schneckenförderers 34, die mit dem Drehzahlsensor 52 gemessene Drehzahl des Hauptmotors 38, die mit dem Drehzahlsensor 50 gemessene Drehzahl der Häckseltrommel 22, sowie der mit dem Sensor 42 gemessene Füllstand des Puffers 32 und der mit dem Walzenabstandssensor 48 gemessene Abstand zwischen den Preßwalzen 36. Letzterer kann auch zur Ertragsmessung und -kartierung verwendet werden. Die Meßwerte aller sechs genannten Sensoren werden der Steuerschaltung 56 zugeführt.
Die Steuerschaltung 56 enthält einen sogenannten Fuzzy-Regler, der sich aus den Teilsystemen Fuzzyfizierung 68, Inferenz 70, Regelwerk 72 und Defuzzifizierung 74 zusammensetzt. Die Arbeitsweise der Steuerschaltung ist dabei wie folgt:

Aus dem zu regelnden Prozeß 66 werden dem Fuzzy-Regler Systemgrößen (Prozeßgrößen) als Eingangsgrößen zugeführt. Dies sind exakte (scharfe) zeitdiskrete Signale, die der Fuzzy-Regler aufgrund seiner unscharfen Logik noch nicht verstehen kann. Deshalb wird in der ersten Stufe (Fuzzifizierung 68) eine Fuzzifizierung der scharfen Prozeßgrößen durch den Fuzzy-Regler vorgenommen, in dem durch Zugehörigkeitsfunktionen allen Eingangsgrößen eine Maßzahl zugeordnet wird, die ein Maß für die Zugehörigkeit der gerade aktuellen Wertekombination der Eingangsgrößen zu verschiedenen unscharfen Mengen (Fuzzy-Mengen) angibt. So kann es also vorkommen, daß eine oder mehrere scharfe Eingangsgröße(n) mit verschiedenen Zugehörigkeitsfaktoren mehreren Fuzzy-Mengen zugeordnet werden können, wobei für eine Menge der Grad der Zugehörigkeit größer sein kann als für eine andere. Die Definition der Zugehörigkeitsfunktionen kann heuristisch oder modellbasiert erfolgen.

Der eigentliche Reglerkern setzt sich aus Wenn-Dann-Regeln zusammen. Der Wenn-Teil (Bedingungsteil) der Regeln besteht aus der logischen Verknüpfung von Fuzzy-Mengen, die linguistische, unscharfe Umschreibungen von Mengen sind, die den Eingangsgrößen bestimmte Eigenschaften zuschreiben. Der Dann-Teil (Konsequenz) besteht aus einer unscharfen, linguistischen Umschreibung, wie die Reglerausgangsgröße aufgrund der Eigenschaften der Eingangsgrößen geartet sein soll. Das Regelwerk 72 ist somit eine linguistische unscharfe Beschreibung von Expertenwissen, auf Grundlage dessen der Regler seine Entscheidungen trifft, welche Stellgröße er an den Prozeß 66 ausgibt.

In der zweiten Phase, der Inferenz 70, stellt der Fuzzy-Regler zunächst fest, welche Bedingungsteile (Wenn-Teile) der im Regelwerk 72 definierten Wenn-Dann-Regeln auf die aktuelle Situation an den Eingängen des Reglers überhaupt zutreffen (sogenanntes Matching). Der Matching-Vorgang findet alle anwendbaren Regeln für eine bestimmte Wertekombination der Eingangsgrößen, indem er alle Zugehörigkeitsmaßzahlen zu allen Fuzzy-Mengen dieser Eingangsgrößen betrachtet, die größer als Null sind. Nach dem Matching-Vorgang ist also eine Auswahl getroffen, welche Regeln unter allen Regeln des Regelwerkes 72 für die gegebene Eingangsgrößenkombination zur Anwendung kommen. Der darauffolgende Schritt ist der eigentliche Inferenzalgorithmus. In ihm wird eine Maßzahl für die logische Verknüpfung dieser Fuzzy-Mengen berechnet, also für den Bedingungsteil der Regeln, um die Gewißheit zu quantifizieren, mit der die verschiedenen Bedingungsteile der Regeln für die gegebene Eingangsgrößensituation zutreffen. Vor dem eigentlichen Inferenzalgorithmus stehen also mehrere Bedingungsteile der Regeln mit verschiedenen Zugehörigkeitsfaktoren zur Verfügung. Der Inferenzmechanismus 70 gewichtet die Schlußfolgerungen der Regeln mit einem Gewichtsfaktor, der dem jeweiligen Zugehörigkeitsfaktor des Bedingungsteiles entspricht, um die Anwendbarkeit verschiedener Schlußfolgerungen zu quantifizieren. Er bildet die sogenannten implizierten Fuzzy-Mengen (implied fuzzy sets). Nachdem dieser Vorgang für jede identifizierte Regel durchgeführt wurde, stehen mehrere Vorschläge für die Reglerausgangsgröße zur Verfügung, die mit unterschiedlichen Gewichtsfaktoren behaftet sind.

Im letzten Schritt setzt der Fuzzy-Regler aus allen gewichteten Vorschlägen für die Reglerausgangsgröße (Schlußfolgerungen) eine einzige Schlußfolgerung zusammen, die als Reglerausgangsgröße zur Anwendung kommt. Diesen Schritt bezeichnet man als Defuzzifizierung 74 und es existieren mehrere Defuzzifizierungsmethoden, um die Reglerausgangsgröße zu berechnen. Diese Ausgangsgröße ist wieder ein exakter (scharfer) Wert, der direkt dem Prozeß zugeführt wird.

Der Fuzzy-Regelalgorithmus benutzt nur die Regelabweichungen und ihre zeitlichen Änderungen als Eingangsgrößen. Die restlichen Eingangsinformationen werden für Überwachungs- und Kontrollalgorithmen benötigt, die ebenfalls in der Steuerschaltung 56 ablaufen, jedoch nicht über den Fuzzy-Regler). Sie dienen der Berechnung des Durchsatzes an Erntegut sowie zur Überwachung des gesamten Ernte-und Förderprozesses.

Reglerausgangsgrößen sind ein Stellsignal zur Änderung der Drehzahl des Schneckenförderers 34 sowie ein Stellsignal zur Änderung der Fahrgeschwindigkeit der Erntemaschine 10. Weitere Merkmale des Regelsystems sind umfangreiche Diagnose- und Anzeigemöglichkeiten sowie eine Kalibrierbetriebsart und die Vorwählbarkeit eines bestimmten Mengendurchsatzes, der durch das Regelsystem konstant gehalten wird.

Die Berechnung der Reglerausgangsgrößen erfolgt wie oben erläutert, wobei zu beachten ist, daß der Regler vier Eingangsgrößen (die Abweichung zwischen Soll- und Istabstand der Preßwalzen 36, ihre Zeitableitung, die Abweichung zwischen Soll- und Istbefüllung des Puffers 32 sowie ihre zeitliche Ableitung) und zwei Ausgangsgrößen hat. Es handelt sich also um ein sogenanntes MIMO- (Multi Input Multi Output) System. Eine stark vereinfachte Arbeitsweise des Reglers kann wie folgt angegeben werden:

Falls der Pufferbefüllstand unter eine bestimmte Schwelle abgesunken ist, soll die Fahrgeschwindigkeit der Erntemaschine erhöht werden, bis der Befüllstand wieder einen ausreichenden Wert erreicht hat.

Der Befüllstand des Puffers 32 muß so sein, daß der Schneckenförderer 34 stets mit Material beaufschlagt ist.

Weicht der Abstand der Vorpreßwalzen 36 vom vorgewählten Wert ab, so wird die Drehzahl des Schneckenförderers 34 entsprechend angepaßt; d. h. sie muß erhöht werden, wenn der Abstand unter den Sollabstand fällt und muß nach unten korrigiert werden, wenn er über den Sollabstand steigt.

Ein besseres Ansprechverhalten der Regelung wird durch die Miteinbeziehung der zeitlichen Änderungen der Regelabweichungen erreicht.

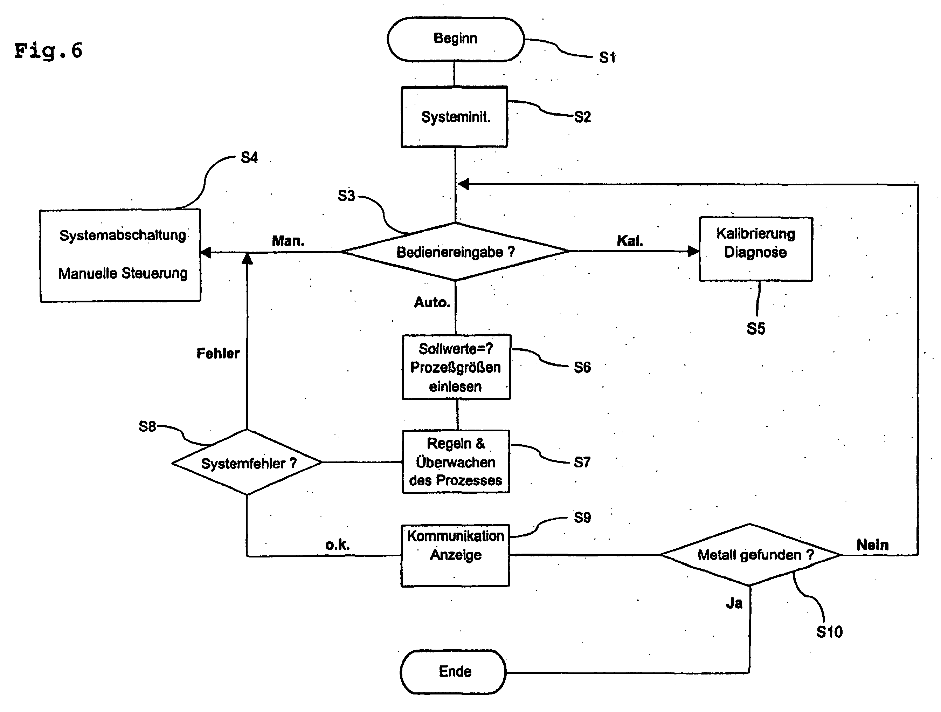

In Figur 6 ist ein Flußdiagramm der Steuerschaltung 56 wiedergegeben. Nach dem Start in S1, beispielsweise nach dem Anlassen der Erntemaschine 10 wird die Steuerschaltung in Schritt S2 initialisiert, d. h. aus einem permanenten Speicher werden die von der Steuerschaltung 56 benötigten Programme und Daten ausgelesen. In Schritt S3 wird abgefragt, welche Bedienereingabe vorliegt. Es bestehen drei Optionen, manuelle Steuerung, automatische Steuerung und Kalibrierung. Wird manuelle Steuerung gewählt, folgt S4, in dem das automatische Steuersystem abgeschaltet wird und eine manuelle Steuerung der Vortriebsgeschwindigkeit erfolgt. Wird Kalibrieren gewählt, folgt Schritt S5, in dem eine Kalibrierung und Diagnose der Funktionen der Steuerung durchgeführt wird. Wird automatische Steuerung gewählt, folgt Schritt S6, in dem die Sollwerte eingelesen werden, insbesondere für die Rate des verarbeiteten Gutes. Danach wird in S7 in der oben beschriebenen Weise der Ernteprozeß geregelt und überwacht. Dabei wird regelmäßig in Schritt S8 überprüft, ob ein Systemfehler vorliegt. Falls das nicht der Fall ist, folgt Schritt S4, d. h., daß zu manueller Steuerung übergegangen wird. Alternativ, wenn also kein Systemfehler vorliegt, sondern alles in Ordnung ist, folgt Schritt S9, in dem auf einer Anzeigeeinrichtung in der Bedienerkabine 18 die aktuellen Daten angezeigt werden. Der Benutzer kann also beispielsweise die Vortriebsgeschwindigkeit, und die Rate und Gesamtmenge des geernteten Gutes ablesen. Es folgt Schritt S10, in dem abgefragt wird, ob ein Metalldetektor, der in einer der Vorpreßwalzen 36 angeordnet ist, ferromagnetisches Metall nachgewiesen hat. Falls Metall nachgewiesen wurde, folgt in Schritt S11 das Ende des Prozesses, da der Bediener die Erntemaschine 10 anhalten und das Metall entfernen muß. Anderenfalls folgt wieder Schritt S3.

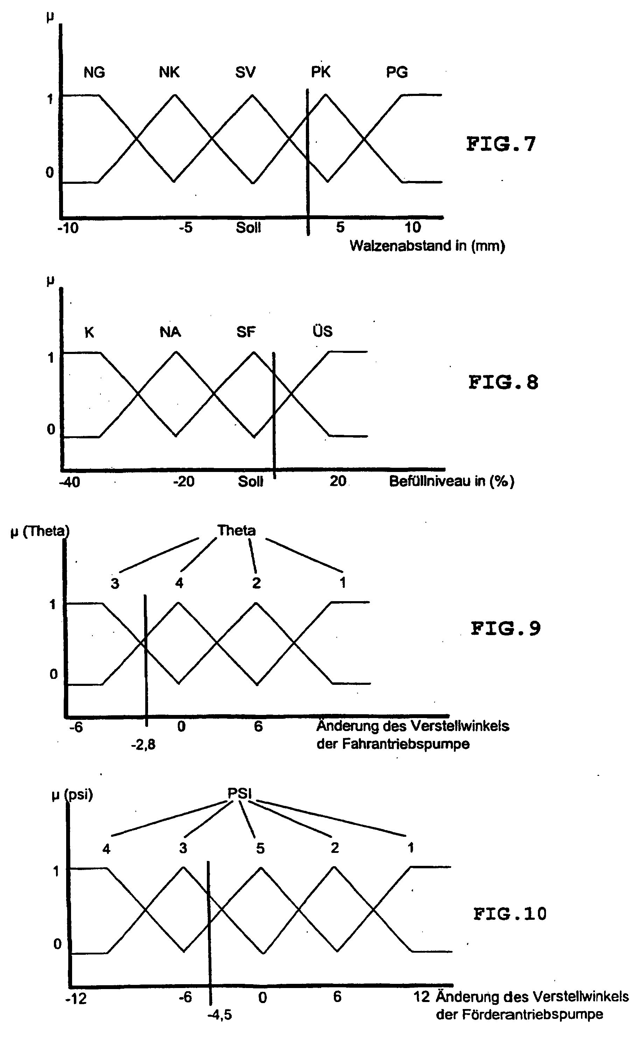

Im folgenden wird das Prinzip einer Steuerschaltung 56 mit . einem Fuzzy-Regler anhand eines Beispiels erläutert. Die Fuzzyfizierung 68 verwendet demnach die in Figur 7 und 8 dargestellten eindimensionalen triangulären Zugehörigkeitsfunktionen für die Eingangsgrößen Walzenabstand und Befüllniveau. Für den Walzenabstand sind fünf Fuzzymengen vorgesehen, nämlich negativ groß (NG), negativ klein (NK), soll (SA), positiv klein (PK) und positiv groß (PG). Der Wertebereich des Walzenabstands ist mit der in Figur 7 dargestellten Zugehörigkeitsfunktion somit unscharf in fünf Mengen unterteilt worden. Für das Befüllniveau des Puffers 32 sind vier Fuzzymengen vorgesehen, nämlich kritisch (K), noch ausreichend (NA), Soll (SB) und Übersoll (ÜS). Der Wertebereich des Befüllniveaus ist mit der in Figur 8 dargestellten Zugehörigkeitsfunktion unscharf in vier Mengen unterteilt worden. Es ergeben sich damit zwei Matrizen der Dimension 5x4 für die Reglerausgangsgrößen im Regelwerk 72.

Das Regelwerk 72 für die beiden Reglerausgangsgrößen könnte eine Matrix P1 ergeben, die wie folgt aussieht:

| | NG | NK | SV | PK | PG |
|---|---|---|---|---|---|
| K | θ1 | θ1 | θ1 | θ1 | θ1 |
| NA | θ2 | θ2 | θ2 | θ2 | θ2 |
| SF | θ4 | θ4 | θ4 | θ4 | θ4 |
| ÜS | θ3 | θ3 | θ3 | θ3 | θ3 |

In obiger Tabelle bilden die Walzenabstände die Spalten und die Befüllniveaus die Zeilen. Die Tabelle gibt die Änderung des Verstellwinkels der Hydraulikpumpe für den Fahrantrieb 40 in Abhängigkeit vom Walzenabstand und vom Befüllniveau an. Die Bedeutung der Winkel θ ist derart, daß bei θ1 der Verstellwinkel der Hydraulikpumpe für den Fahrantrieb 40 stark vergrößert wird, so daß die Vortriebsgeschwindigkeit stark ansteigt. Bei θ2 wird der Verstellwinkel etwas vergrößert, bei θ3 wird er etwas verkleinert und bei θ4 nicht geändert. Anstelle der Änderung eines Winkels kann die Einstellung der Vortriebsgeschwindigkeit auf beliebige andere Weise erfolgen.

Für das Stellsignal für die Geschwindigkeit des Schneckenförderers 34 ergibt sich eine zweite Matrix P2, die die Änderung des Verstellwinkels des Antriebs 42 des Schneckenförderers 32 in Abhängigkeit vom Walzenabstand und vom Befüllniveau angibt:

| | NG | NK | SV | PK | PG |
|---|---|---|---|---|---|
| K | ψ5 | ψ5 | ψ5 | ψ3 | ψ4 |
| NA | ψ1 | ψ2 | ψ5 | ψ3 | ψ4 |
| SF | ψ1 | ψ2 | ψ5 | ψ3 | ψ4 |
| ÜS | ψ1 | ψ2 | ψ5 | ψ3 | ψ3 |

In dieser Tabelle bilden die Walzenabstände ebenfalls die Spalten und die Befüllniveaus die Zeilen. Die Winkel ψ haben die Bedeutung, daß bei ψ1 der Verstellwinkel stark vergrößert wird, also die Fördergeschwindigkeit stark angehoben wird. Bei ψ2 wird der Verstellwinkel etwas vergrößert, bei ψ3 etwas verringert, bei ψ4 stark verringert und bei ψ5 konstant belassen. Auch hier kann die Variation der Fördergeschwindigkeit anstatt einer Winkelverstellung auf beliebige andere Weise realisiert werden.

Aus den unscharfen Werten der Stellgrößen werden mit Hilfe einer klassischen Defuzzyfizierungsmethode (z.B. Schwerpunktmethode zwei scharfe Stellgrößen (Reglerausgangsgrößen) ermittelt, was im folgenden anhand eines Beispielwertepaares erläutert wird. Falls der Walzenabstand 4 mm (entspricht der Fuzzy-Menge "zu groß") ist und das Befüllniveau auf +5% angestiegen("zu viel") ist, können aus den Figuren 7 und 8 die entsprechenden Werte der Zugehörigkeitsfunktionen abgelesen werden.

Man findet für den Walzenabstand eine Zugehörigkeit µ von 0,8 für positiv klein (PK) und von µ = 0,2 für Soll (SV). Für das Befüllniveau erhält man µ = 0.6 für Soll (SF) und µ = 0,4 für Übersoll (ÜS). Der Matching-Prozeß findet heraus, daß die Mengen PK, SV, SF und ÜS auf die Eingangsgrößensituation zutreffen. Daher finden alle Regeln mit der Verknüpfung dieser Mengen in ihrem Bedingungsteil Eingang in die Berechnung der Stellgröße. Im Regelwerk 72, also den obigen Matrizen, können die Stellgrößen für die Vortriebsgeschwindigkeit und die Fördergeschwindigkeit abgelesen werden. In beiden Matrizen sind jeweils vier Stellgrößen zu berücksichtigen. Für die einzelnen Stellgrößen wird ein Zugehörigkeitsmaß durch Anwendung des Miwimum-Operators "min" berechnet, d. h., es wird jeweils das kleinere Zugehörigkeitsmaß verwendet. Für das Wertepaar PK, SF findet man in Matrix P2 ψ3, dessen Zugehörigkeitsmaß µ für PK 0,8 und für SF 0,6 beträgt (s. Figur 7 und 8). Daher wird der Stellgröße ψ3 ein Zugehörigkeitsmaß µ = 0,6 zugeordnet, während sich für dasselbe Wertepaar gemäß Matrix P1 θ4 ergibt. Das Zugehörigkeitsmaß µ für θ4 ergibt ebenfalls mit dem min-Operator berechnet einen Wert von 0.6. Analog findet man bei PK, ÜS µ = 0,4 für θ3 (das Minimum aus 0,8 und 0,4), sowie µ = 0,4 für ψ3 (das Minimum aus 0,8 und 0,4). Bei SV, SF ergibt sich für 04 ein µ von 0.2 und für ψ5 ebenfalls ein µ von 0.2. Bei SV, ÜS ergibt sich µ = 0,2 für θ3 und µ = 0,2 für ψ5. Falls man nun für eine der Stellgrößen verschiedene Zugehörigkeitsmaße µ erhält, wird jeweils das Maximum weiterverwendet, d. h. bei ψ3 wird µ = 0,6 gesetzt, was das Maximum aus 0,4 und 0, 6 ist. Im Ergebnis erhält man für ψ3 µ = 0,6, für ψ5 µ = 0,2, für θ3 µ = 0,4 und für θ4 µ = 0,6. Man erhält also zwei unscharfe Stellgrößen für jede der zwei Ausgangsgrößen. Mit Hilfe der Zugehörigkeitsfunktionen für die Reglerausgangsgrößen können die scharfen Ausgangswerte abgelesen werden. Dazu kann eine Normierung der Zugehörigkeitsmaße auf 1 erfolgen, so daß die Summe der normierten µ 1 beträgt. Für ψ erhält man normierte µ von 0,75 für ψ3 und 0,25 für ψ5, für θ ergibt sich 0.4 für θ3 und 0.6 für θ4. Das Normieren erfolgt durch Dividieren der oben berechneten µ durch die Summe der µ für θ bzw. ψ. Schließlich kann die Reglerausgangsgröße aus der Figur 9 bzw. 10 abgelesen werden. Man erhält für das Beispiel einen Winkel von -2.8° für die Vortriebsgeschwindigkeit und -4,5° für die Fördergeschwindigkeit.

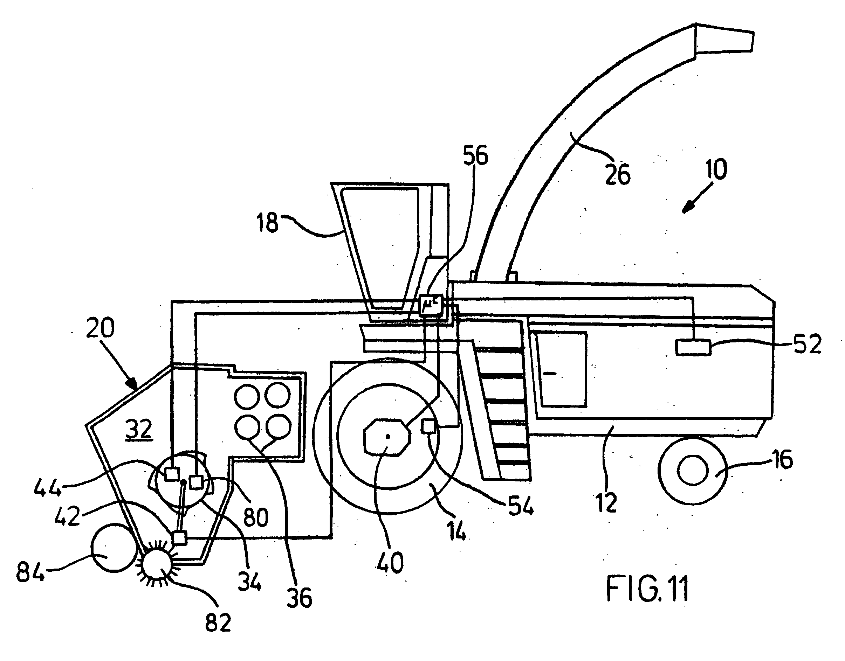

In Figur 11 ist eine Erntemaschine 10 in Form eines Feldhäckslers nach einer zweiten Ausführungsform der Erfindung dargestellt. Elemente, die Elementen der ersten Ausführungsform entsprechen, sind mit gleichen Bezugszeichen gekennzeichnet. In der zweiten Ausführungsform ist eine Erntegutaufnahmevorrichtung 20 in Form einer Pick-up vorgesehen, die ein Paar sich quer zur Vortriebsrichtung erstreckender Walzen 82, 84 zur Aufnahme von bereits gemähtem Erntegut vom Erdboden aufweist. Das Erntegut wird einer Förderschnecke 34 zugeführt, die über einen hydrostatischen Antrieb 42 mit variabler Drehzahl angetrieben wird und das Erntegut von den Walzen 82, 84 den Vorpreßwalzen 36 zuführt. Es ist somit nur ein relativ geringes Volumen für einen Puffer 32 unterhalb der Förderschnecke 34 vorhanden. Die Steuerschaltung 56 wird mit folgenden Eingangssignalen beaufschlagt: Drehzahl des Hauptmotors mittels des Sensors 52, Vortriebsgeschwindigkeit durch Sensor 54, Drehzahl der Förderschnecke 34 durch Drehzahlsensor 44, und Drehmoment des Antriebs der Förderschnecke 34 durch einen Drehmomentsensor 80. Die Steuerschaltung 56 ist ebenfalls mit einem Fuzzy-Regler versehen, der Ausgangswerte erzeugt, mit dem die Vortriebsgeschwindigkeit der Erntemaschine 10 über den hydrostatischen Fahrtantrieb 40 eingestellt werden. Außerdem wird die Fördergeschwindigkeit der Förderschnecke 34 durch den Fuzzy-Regler eingestellt, wozu der hydrostatische Antrieb 42 mit variabler Drehzahl dient. Eingangswerte für den Fuzzy-Regler ist das Antriebsdrehmoment der Förderschnecke 34 und die Drehzahl der Förderschnecke 34, sowie ihre zeitlichen Ableitungen. Das Antriebsdrehmoment der Förderschnecke 34 enthält eine Information über den Füllstand, da die Förderschnecke 34 bei hohem Füllstand sich schwerer antreiben läßt als bei niedrigem Füllstand. Es könnte zweckmäßig sein, auch hier einen Sensor für den Füllstand des Puffers 32 vorzusehen, und mit der Steuerschaltung 56 zu verbinden, wie in der ersten Ausführungsform.

## Patentansprüche

1. Einrichtung zum Regeln der Vortriebsgeschwindigkeit einer Erntemaschine (10), mit einer Steuerschaltung (56), die durch einen Sensor mit einem Signal beaufschlagt wird, das eine Information über den Fluß, insbesondere die Rate und/oder Menge von einer Erntegutaufnahmeeinrichtung (20) aufgenommenen Ernteguts enthält, und die die Geschwindigkeit einer Vortriebseinrichtung der Erntemaschine (10) derart einstellt, daß die Rate des von einer Erntegutverarbeitungseinrichtung verarbeiteten Ernteguts einem bestimmten, voreingestellten oder einstellbaren Sollwert entspricht, **dadurch gekennzeichnet, daß** die Steuerschaltung einen Fuzzy-Regler enthält.

2. Einrichtung nach Anspruch 1, **dadurch gekennzeichnet, daß** der Fuzzy-Regler Zugehörigkeitsfunktionen für die Eingangsvariable oder Eingangsvariablen der Steuerschaltung (56) erzeugt und nach einem Regelwerk (72) Ausgangswerte ermittelt, mit denen die Vortriebsgeschwindigkeit eingestellt wird.

3. Einrichtung nach Anspruch 1 oder 2, **dadurch gekennzeichnet, daß** die Steuerschaltung (56) zusätzlich Ausgangswerte erzeugt, mit denen eine Fördergeschwindigkeit eingestellt wird, mit der Erntegut der Erntegutverarbeitungseinrichtung zugeführt wird.

4. Einrichtung nach einem der Ansprüche 1 bis 3, **dadurch gekennzeichnet, daß** ein Sensor die Dicke eines Erntegutstroms mißt, der der Erntegutverarbeitungseinrichtung zugeführt wird, und das Ausgangssignal des Sensors und/oder eine Abweichung des Ausgangssignals des Sensors von einem Ausgangssignal, das einem Sollwert der Dicke entspricht, und/oder die Zeitableitung des Ausgangssignals des Sensors und/oder die Zeitableitung einer Abweichung des Ausgangssignals des Sensors von einem Ausgangssignal, das einem Sollwert der Dicke entspricht, der Steuerschaltung (56) als Eingangsvariable zugeführt wird.

5. Einrichtung nach Anspruch 4, **dadurch gekennzeichnet, daß** der Sensor zur Messung der Dicke ein Walzenabstandssensor (48) ist, der den Abstand zwischen zwei Vorpreßwalzen (36) erfaßt.

6. Erntemaschine (10), insbesondere Feldhäcksler oder Mähdrescher, mit einer Einrichtung nach einem der vorhergehenden Ansprüche.

7. Erntemaschine (10) nach Anspruch 6, **gekennzeichnet durch** einen Puffer (32), in dem von einer Erntegutaufnahmeeinrichtung (20) aufgenommenes Erntegut zwischengespeichert wird, bevor es **durch** einen Förderer einer Erntegutverarbeitungseinrichtung zugeführt wird.

8. Erntemaschine (10) nach Anspruch 7, **dadurch gekennzeichnet, daß** der Förderer ein Schneckenförderer (34) ist.

9. Erntemaschine (10) nach Anspruch 7 oder 8, **dadurch gekennzeichnet, daß** der Austragsbereich des Förderers als Schleuderförderer ausgebildet ist.

10. Erntemaschine (10) nach einem der Ansprüche 7 bis 9, **dadurch gekennzeichnet, daß** der Puffer (32) lösbar oder fest mit der Erntemaschine (10) verbunden ist.

11. Erntemaschine (10) nach einem der Ansprüche 7 bis 10, **dadurch gekennzeichnet, daß** ein Befüllniveausensor (46) den Füllstand des Puffers (32) mißt, und das Ausgangssignal des Sensors einer Regeleinrichtung mit einer Steuerschaltung (56) zugeführt wird, die die Vortriebsgeschwindigkeit der Erntemaschine (10) und/oder die Fördergeschwindigkeit des Förderers steuert, vorzugsweise derart, daß ein Mindestwert des Füllstandes des Ernteguts im Puffer (32) nicht unterschritten wird.

12. Erntemaschine (10) nach Anspruch 11, **dadurch gekennzeichnet, daß** das Ausgangssignal des Befüllniveausensors (46) und/oder eine Abweichung des Ausgangssignals des Sensors von einem Ausgangssignal, das einem Sollwert des Füllstands entspricht, und/oder die Zeitableitung des Ausgangssignals des Befüllniveausensors (46) und/oder die Zeitableitung einer Abweichung des Ausgangssignals des Sensors von einem Ausgangssignal, das einem Sollwert des Füllstands entspricht, der Steuerschaltung (56) als Eingangsvariable zugeführt wird.

13. Erntemaschine (10) nach einem der Ansprüche 6 bis 12, **dadurch gekennzeichnet, daß** die Steuerschaltung (56) die Geschwindigkeit einer Vortriebseinrichtung durch Verstellung eines hydrostatischen Fahrantriebs (40) einstellt.

14. Erntemaschine (10) nach einem der Ansprüche 6 bis 13, **dadurch gekennzeichnet, daß** die Steuerschaltung (56) die Fördergeschwindigkeit, mit der Erntegut der Erntegutverarbeitungseinrichtung zugeführt wird, durch Verstellung eines hydrostatischen Antriebs (42) einstellt.

15. Erntemaschine (10) nach einem der Ansprüche 6 bis 14, **dadurch gekennzeichnet, daß** die Erntegutverarbeitungseinrichtung eine Häckseltrommel (22) oder eine Schneid-, Förder-, Dresch- oder Trenneinrichtung ist.

## Claims

1. A device for regulating the speed of propulsion of a harvesting machine (10), with a control circuit (56) which is acted upon through a sensor by a signal which contains information on the flow, especially the rate and/or the amount of crop received from a crop take-up device (20) and which so adjusts the speed of a propulsion device of the harvesting machine (10) that the rate of the crop processed by a crop processing device corresponds to a specific preset or adjustable set-point value, **characterized in that** control circuit includes a fuzzy regulator.

2. A device according to claim 1, **characterized in that** the fuzzy regulator generates associative functions for the input variable or input variables of the control circuit (56) and communicates output values to a regulating mechanism (72) with which values the speed of propulsion is set.

3. A device according to claim 1 or 2, **characterized in that** the control circuit (56) generates additional output values with which the feed speed with which the crop is fed to the crop processing device is set.

4. A device according to any of claims 1 to 3, **characterized in that** a sensor measures the thickness of a crop stream which is fed to the crop processing device and the output signal of the sensor and/or a deviation of the output signal of the sensor from an output signal which corresponds to a set-point value of the thickness, and/or a time derivative of the output signal of the sensor and/or the time derivative of a deviation of the output signal of the sensor from an output signal which corresponds to set-point value of the thickness is fed to the control circuit (56) as an input variable.

5. A device according to claim 4, **characterized in that** the sensor for measuring the thickness is a roller spacing sensor (48) which detects the spacing between two pre-compression rollers (36).

6. A harvesting machine (10), especially a forage harvester or combine harvester, with a device according to any of the preceding claims.

7. A harvesting machine (10) according to claim 6, **characterized by** a buffer (32) in which crop received from a crop take-up device (20) is stored in the interim, before it is fed by a conveyor to a crop processing device.

8. A harvesting machine (10) according to claim 7, **characterized in that** the conveyor is an auger conveyor (34).

9. A harvesting machine (10) according to claim 7 or 8, **characterized in that** the discharge region of the conveyor is formed as a centrifugal conveyor.

10. A harvesting machine (10) according to any of claims 7 to 9, **characterized in that** the buffer (32) is connected releasably or fixedly to the harvesting machine (10).

11. A harvesting machine (10) according to any of claims 7 to 10, **characterized in that** a filling level sensor (46) measures the state of fill of the buffer (32) and the output signal of the sensor is fed to a regulating device with a control circuit (56) which controls the speed of propulsion of the harvesting machine (10) and/or the conveying speed of the conveyor, preferably in such a manner that a minimum value of the state of fill of the crop in the buffer (32) is not fallen below.

12. A harvesting machine (10) according to claim 11, **characterized in that** the output signal of the filling level sensor (46) and/or a deviation of the output signal of the sensor from an output signal which corresponds to a set-point value of the state of fill, and/or the time derivative of the output signal of the filling level sensor (46) and/or the time derivative of a deviation of the output signal of sensor from an output signal which corresponds to a set-point value of the state of fill, is fed to the control circuit (56) as an input variable.

13. A harvesting machine (10) according to any of claims 6 to 12, **characterized in that** the control circuit (56) sets the speed of a propulsion device by adjusting a hydrostatic travel drive (40).

14. A harvesting machine (10) according to any of claims 6 to 13, **characterized in that** the control circuit (56) sets the feed speed with which crop is fed to the crop processing device by adjusting a hydrostatic drive (42).

15. A harvesting machine (10) according to any of claims 6 to 14, **characterized in that** the crop processing device is chopper drum (22) or a cutting, conveying, threshing or separating device.

## Revendications

1. Dispositif pour régler la vitesse d'avance d'une récolteuse (10) avec un circuit pilote de commande (56), qui est alimenté par un capteur avec un signal, qui contient une information sur le flux, en particulier le taux et/ou la quantité de récolte ramassée par un dispositif de ramassage de récolte (20), et qui règle la vitesse d'un équipement de propulsion de la récolteuse (10) de telle sorte que le taux de la récolte traitée par un dispositif de traitement de récolte corresponde à une valeur prescrite déterminée, préréglée ou réglable, **caractérisé en ce que** le circuit pilote de commande contient un régulateur à logique floue.

2. Dispositif selon la revendication 1, **caractérisé en ce que** le régulateur à logique floue produit des fonctions d'appartenance pour la variable d'entrée ou des variables d'entrée du circuit pilote de commande (56) et détermine d'après un ouvrage de régulation (72) des valeurs initiales, qui permettent de régler la vitesse d'avance.

3. Dispositif selon la revendication 1 ou 2, **caractérisé en ce que** le circuit pilote de commande (56) produit en outre des valeurs initiales, qui permettent de régler une vitesse de transport, à laquelle la récolte du dispositif de traitement de récolte est acheminée.

4. Dispositif selon l'une quelconque des revendications 1 à 3, **caractérisé en ce qu'**un capteur mesure l'épaisseur d'un écoulement de récolte, qui est acheminé vers le dispositif de traitement de la récolte, et **en ce que** le signal de sortie du capteur et/ou une déviation du signal de sortie du capteur d'un signal de sortie qui correspond à une valeur prescrite de l'épaisseur, et/ou la dérivation temporelle du signal de sortie du capteur et/ou la dérivation temporelle d'une déviation du signal de sortie du capteur d'un signal de sortie qui correspond à une valeur prescrite de l'épaisseur, est acheminé vers le circuit pilote de commande (56) en tant que variable d'entrée.

5. Dispositif selon la revendication 4, **caractérisé en ce que** le capteur de mesure de l'épaisseur est un capteur de distance des rouleaux (48), qui détecte la distance entre deux rouleaux de précompression (36).

6. Récolteuse (10), en particulier ramasseuse-hacheuse-chargeuse ou moissonneuse-batteuse comprenant un dispositif selon l'une quelconque des revendications précédentes.

7. Récolteuse (10) selon la revendication 6, **caractérisé par** un tampon (32), dans lequel une récolte ramassée par un dispositif de ramassage de récolte (20) est temporairement emmagasinée, avant d'être acheminée par un transporteur vers un dispositif de traitement de récolte.

8. Récolteuse (10) selon la revendication 7, **caractérisée en ce que** le transporteur est un transporteur à vis (34).

9. Récolteuse (10) selon la revendication 7 ou 8, **caractérisée en ce que** la zone de déchargement du transporteur est conçue comme un transporteur à vis.

10. Récolteuse (10) selon l'une quelconque des revendications 7 à 9, **caractérisée en ce que** le tampon (32) est raccordé à la récolteuse (10) solidement ou de manière détachable.

11. Récolteuse (10) selon l'une quelconque des revendications 7 à 10, **caractérisée en ce qu'**un capteur de niveau de remplissage (46) mesure la hauteur de remplissage du tampon (32), et **en ce que** le signal de sortie du capteur est acheminé vers un dispositif de réglage avec un circuit pilote de commande (56), qui commande la vitesse d'avance de la récolteuse (10) et/ou la vitesse de transport du transporteur, de préférence de telle sorte qu'une valeur minimale de la hauteur de remplissage de la récolte dans le tampon (32) ne soit pas sous-dépassée.

12. Récolteuse (10) selon la revendication 11, **caractérisée en ce que** le signal de sortie du capteur de niveau de remplissage (46) et/ou une déviation du signal de sortie du capteur d'un signal de sortie qui correspond à une valeur prescrite du niveau de remplissage, et/ou la dérivation de temps du signal de sortie du capteur de niveau de remplissage (46) et/ou la dérivation de temps d'une déviation du signal de sortie du capteur d'un signal de sortie, qui correspond à une valeur prescrite de la hauteur de remplissage, qui est acheminé vers le circuit pilote de commande (56) en tant que variable d'entrée.

13. Récolteuse (10) selon l'une quelconque des revendications 6 à 12, **caractérisée en ce que** le circuit pilote de commande (56) règle la vitesse d'un dispositif d'avance par l'ajustage d'un mécanisme de translation hydrostatique (40).

14. Récolteuse (10) selon l'une quelconque des revendications 6 à 13, **caractérisée en ce que** le circuit pilote de commande (56) règle la vitesse de transport, à laquelle la récolte du dispositif de traitement de récolte est acheminée, par l'ajustage d'un mécanisme de translation hydrostatique (42).

15. Récolteuse (10) selon l'une quelconque des revendications 6 à 14, **caractérisée en ce que** le dispositif de traitement de la récolte est un tambour hacheur (22) ou un dispositif de coupage, de transport, de battage ou de séparation.
